# EUROPEAN PATENT SPECIFICATION

(11) **EP 2 877 736 B1**
(45) Date of publication and mention of the grant of the patent: **14.10.2020**
(21) Application number: 13747884.8
(22) Date of filing: 26.07.2013
(51) Int. Cl.: F03B 13/26, F03B 17/06

(54) **SCREW, SCREW PART AND METHOD THEREFOR**
SCHRAUBE, SCHRAUBENTEIL UND VERFAHREN DAFÜR
VIS, PARTIE DE VIS ET PROCÉDÉ ASSOCIÉ

(30) Priority: 26.07.2012 NL 2009233
(43) Date of publication of application: 03.06.2015
(73) Proprietor: Jongejan, Herman Jan, 8532 AX Lemmer (NL)
(72) Inventor: Jongejan, Herman Jan, 8532 AX Lemmer (NL)
(74) Representative: Verdijck, Gerardus
(86) International application number: PCT/NL2013/050561
(87) International publication number: WO 2014/017914

(56) References cited:
- WO-A1-2007/097659
- WO-A2-2011/097655
- GB-A- 2 459 843
- JP-A- S55 164 781
- US-A1- 2008 315 591

## Description

The invention relates to a screw. The invention relates particularly to a screw for converting movement of a fluid such as water, air, gases or emulsions to a rotating movement of the screw. The rotating movement is for instance employed to generate electrical energy or to pump a liquid.

Screws for generating energy from flowing water are known in practice. The manufacture and placing of such screws is however complex and costly.

WO 2011/097655 A2 describes a turbine apparatus having a rotational disk comprising a hub and a plurality of V-shaped turbine blades extending radially from the hub.

WO 2007/097659 A1 describes a screw turbine comprising parts provided with blades and mounted on an axis in a parallel position with respect to the direction of a liquid or gas flow.

US 2008/315591 A1 describes a device for producing regenerative and renewable hydraulic energy. The device comprises a generator, a drive shaft connected to the generator. The drive shaft comprises a plurality of blades.

An object of the invention is to obviate or reduce the above stated problem and to provide an improved screw with a simplified installation.

This object is achieved with the screw according to the invention, the screw comprising a series of screw parts, each screw part comprising at least one screw blade, wherein successive screw parts are coupled to each other by means of a coupling, wherein the screw blades of successive screw parts substantially connect to each other such that the series of screw parts forms a spiral-shaped screw.

The screw according to the invention can be seen as a kind of Archimedes screw. Because of the series of screw parts the inventor refers to a ribbon rotor. The spiral shape can also can also be termed a helical shape. In other words, the screw blade formed by the screw parts has a helical shape.

Because the screw is constructed from screw parts, the screw can be produced and transported in parts. Production is therefore simplified compared to conventional screws. Transport is moreover simplified. This is a particular advantage in the case of relatively large screws, for instance with a length of more than 10, 50 or 100 metres and/or screw blades with a diameter of more than 2 metres, for instance 4 metres.

An additional advantage is that the screw according to the invention can be easily assembled from the screw parts. The screw is for instance transported as separate parts and assembled at the intended location. An existing screw can likewise be easily lengthened or shortened by respectively adding screw parts to the series or removing screw parts from the series. The formation of the series can moreover be modified at a later stage by adding, replacing or removing screw parts.

The screw according to the invention is moreover found to be suitable for regulating sedimentation in a waterway such as a river. The screw influences the flow of the water, wherein the water is usually slowed down. Sediment such as sand will hereby settle more quickly. Owing to the slower flow less sediment will moreover be carried downstream. In addition, sediment will settle in a predictable manner.

It is noted that the screw according to the invention can simultaneously fulfil the function of energy generation and regulation of sediment. In short, the screw is applied for energy generation and/or regulation of sediment.

It has moreover been found that the screw according to the invention can be applied in water with a lower flow speed than usual for conventional screws. The screw according to the invention can likewise be applied in water with a higher flow speed than is possible with conventional screws. Furthermore, the screw according to the invention can be applied in turbulent flows.

In addition, the screw according to the invention has been found usable in land reclamation and protection of objects.

The screw blades of successive screw parts substantially connect to each other, i.e. the screw blades are connected such that a substantially continuous screw blade is formed.

In a preferred embodiment the successive screw parts are coupled movably to each other by means of the coupling.

Because the coupling is embodied such that the screw parts are movable relative to each other, the screw acquires a certain measure of flexibility. The screw can hereby adjust itself to the flow profile in the fluid. Even in the case of an uneven flow, i.e. the flow speed and flow direction vary with position and/or over time, the movement of the fluid is converted by the screw according to the invention to rotation of the screw.

This is an advantage compared to conventional screws. This is because such screws require an even flow. Conventional screws are particularly unsuitable for applications in uneven flows such as turbulent flows, for instance in the case of tidal flow, river flow or flow close to barriers. The screw according to the invention can in contrast also be applied in a fluid with an uneven flow.

A further advantage of the screw according to the invention is that, when it is used in water, the water fauna is not adversely affected by the screw. The problem occurs with conventional screws that fish or other aquatic animals can be injured by contact with the screw. This problem is prevented with the screw according to the invention. This is because, due to the flexibility of the screw, the screw will yield to some extent when there is contact with an aquatic animal. The screw can moreover be placed in freely movable manner in the water. When there is contact with an animal or human the screw is hereby pushed to some extent out of its position without this adversely affecting the rotation. The flexible screw can hereby be applied in environmentally-friendly (human and animal-friendly) manner.

An outer end of the screw has for instance a decreasing outer diameter. A separate conical element is for instance provided for this purpose on an outer end of the screw. The one or more screw parts preferably have a decreasing diameter at the outer end of the screw. The generator is for instance provided in the conical element, wherein the generated current is optionally transported through the shaft of the screw.

In a preferred embodiment of the invention each screw part comprises two screw blades so that the series of screw parts forms a screw with a double spiral form. In other words, the screw forms a double helix.

It is noted that screw parts with more than two screw blades are also possible according to the invention, for instance three, four or more screw blades, for the purpose of obtaining a triple, quadruple etc. spiral shape.

According to the inventor, the double spiral shape results in a constant rotation direction. Even when the flow direction of the fluid changes, the screw according to the invention will rotate in the same desired direction.

In a preferred embodiment according to the invention the screw blades comprise a profile on at least one side.

In other words, the upper and/or lower surface of the screw blades is profiled, i.e. not wholly flat. Elevations or grooves are for instance arranged. It is found that a non-flat screw blade has a favourable effect on the conversion of the movement of the fluid to rotation of the screw according to the invention.

The profiling results in a reduction of the turbulence on the rear side of the screw. The grip of the screw on the fluid in which the screw is operating is moreover increased because the profiling creates a forward pressure during rotation of the screw. The profiling provides for a pressure profile over the screw blade.

It is noted that preferably all screw blades of the screw comprise such a profile. Alternatively, several of the screw blades of the screw are provided according to the invention with a profile. Alternatively, one or more screw blades take a flat form, i.e without profile.

The profile is preferably a wave profile, i.e. the height of the surface of the screw blades varies in a wave pattern. The wave profile for instance comprises two peaks and a valley.

In another exemplary embodiment according to the invention the screw blades have a wing profile as known from aircraft.

In another embodiment a screw blade has a profile formed by recesses or grooves in the screw blade. One side of the screw blade is preferably smooth and the other side of the screw blade is provided with such recesses or grooves. Alternatively or additionally, the profile is stepped, i.e. the screw blade has a stepped form. Alternatively or additionally, the screw blade is provided with ridges. The recesses, grooves, stepped form and/or ridges can be provided on one side or on both sides of the screw blade.

As seen in cross-section, the screw blades can be symmetrical as well as asymmetrical. The screw blade is preferably symmetrical.

In a preferred embodiment according to the invention both screw blades comprise substantially the same profile.

In a further preferred embodiment according to the invention the screw parts comprise a plastic, preferably polyethylene (PE), more preferably high-density polyethylene (HDPE).

An advantage of using plastic is that plastics are noncorrosive, in contrast to conventional screws which are usually embodied in metal. Plastics are moreover generally very light compared to metal. Lightweight screw blades are particularly advantageous when applied in water. The screw parts are preferably provided with a plastic having a density lower than the density of water so that a certain buoyancy is obtained.

A further advantage of HDPE is that it is a very strong plastic, whereby great forces can be absorbed. The screw blades are optionally provided with a framework covered with a plastic. The framework is for instance embodied in metal. The corrosion-resistance of the screw is guaranteed by the plastic covering. A framework imparts additional strength to the construction, which may be important particularly in the case of relatively large constructions. The framework for instance comprises metal ribs.

The screw parts are preferably manufactured from a recyclable and/or recycled plastic. This is advantageous in the case environmental considerations or obligations have to be taken into account.

In an exemplary embodiment the screw comprises at least one screw part provided with a closed space. The buoyancy of the screw can be increased with this space, for instance by filling the space with a gas such as air or other fluid. The buoyancy can also be modified by providing the space with a weight. The space for a fluid or a solid material is for instance provided in a screw blade of the screw part.

In a preferred embodiment according to the invention a first screw part and a second adjacent screw part in the series comprise respectively a first aligning means and a second aligning means for aligning the respective screw parts around the rotation axis of the screw.

During assembly of the series for the purpose of forming the screw the individual screw parts have to be aligned in order to thus form the spiral-shaped screw. A screw according to the invention can be assembled quickly and easily by means of the aligning means.

The first aligning means for instance comprises a protrusion and the second aligning means a recess co-acting therewith. The screw parts are aligned relative to each other by placing the protrusion into the associated recess of the second aligning means. Additionally or alternatively, the first or second aligning means comprises a convex profile and the second or first aligning means comprises a concave profile co-acting therewith.

The coupling preferably comprises the aligning means. This has the advantage that, when the screw parts are coupled, they are simultaneously aligned. This enables a quick and easy assembly of the screw. The aligning means for instance comprises a protrusion and a recess co-acting therewith and/or a convex profile and a concave profile co-acting therewith such that pivoting of the adjacent screw parts relative to each other is possible.

In a preferred embodiment at least one screw part comprises a first coupling part for co-action with a second coupling part of an adjacent screw part in order to together form the coupling between these screw parts, wherein one of the first and the second coupling part has a concave shape on the side facing toward the other coupling part, and the other coupling part has on the side facing toward the one coupling part a convex shape fitting into the concave shape. An advantage of the convex-concave coupling is that some degree of movement of the screw parts is possible relative to each other. The convex-concave coupling is for instance provided with a lubricant. A flexible collar or other flexible coupling piece is for instance provided which ensures lubrication of the points of friction between the screw parts. The collar or the coupling piece is preferably configured such that the lubricant, such as grease, remains inside the collar/the coupling piece.

According to the invention the coupling comprises a shaft on which the screw parts are provided. The shaft is flexible.

The shaft is for instance embodied as a rope or cable. The shaft is preferably flexible such that torsional forces can also be absorbed. This is achieved for instance by selecting a suitable material and composition of the shaft. The shaft for instance comprises a metal cable, such as a steel cable under bias.

The screw parts for instance comprise an opening for leading the shaft through the opening.

The shaft for instance comprises a plastic. The shaft for instance comprises a number of strands, for instance of plastic. The shaft for instance comprises a composition of plastic, metal and/or friction layers, for instance a laminate of one or more of these materials. The shaft is preferably provided in flexible manner such that a torsional force twists the shaft, wherein as a result of this twisting the shaft acquires a greater stiffness against torsion. A number of strands of plastic are for instance twisted together to form a plastic rope.

The shaft can be provided substantially centrally in the screw parts, i.e. the longitudinal axis of the shaft substantially coincides with the centre of the screw parts. In another embodiment a plurality of openings are provided in each screw part, wherein a cable, tube - such as a flexible tube - or strand is provided in each opening. The openings are for instance embodied as slots. The openings are preferably not aligned with the longitudinal axis of the screw, i.e. are provided outside the centre of the screw parts.

In a preferred embodiment the shaft comprises an inner core around which at least one tube is arranged, the tube wall of which is provided with a slit extending from the one outer end of the tube to the other outer end of the tube. A slit is alternatively arranged over a part of the length of the tube.

The at least one tube can absorb torsional forces. Owing to the slit the tube will be constricted under the influence of a torsional force, i.e. the diameter of the slit tube decreases. At a determined torsional force the slit tube will make contact with the inner core, so that further decrease in the diameter of the slit tube is prevented. The shaft can therefore twist until a determined rotation of the shaft has been reached.

The slit preferably runs parallel to the longitudinal direction of the tube. In another embodiment the slit runs in a spiral shape over the length of the tube.

The inner core is for instance tubular. In an alternative embodiment according to the invention the inner core is omitted so that the slit tube can constrict further.

A plurality of slit tubes are preferably arranged round each other.

An outer casing is optionally provided round the least one tube. The outer casing connects for instance to a screw part.

It is noted that the shaft with slit tube according to the invention can also be applied per se, i.e. without the screw according to the invention.

In a further preferred embodiment the shaft is hollow. This has the advantage that a lightweight shaft is obtained.

In a further preferred embodiment chambers are provided in the hollow shaft for air, water and/or a solid material. Because the shaft takes a hollow form, air, water and/or a solid material, for instance a gel, can be provided in the shaft. The buoyancy of the shaft can hereby be modified in accordance with the application of the screw. Alternatively or additionally, a different functionality can moreover be obtained by filling the chambers with an appropriate substance.

In a further preferred embodiment a number of the chambers are filled such that the shaft has an asymmetrical mass distribution. This achieves that the mass distribution of the shaft can be modified to the intended application. For instance in a situation where the screw is applied in water, wherein a first part of the screw is provided in faster flowing water than another part of the screw, a substantially uniform rotation of the screw can be obtained by means of an asymmetrical mass distribution.

The hollow shaft preferably comprises an electrically conductive element such as a metal cable or an electrically conductive gel or a conductive emulsion. Electrical energy generated with the screw according to the invention can hereby be transported via the shaft. This is particularly relevant when the generator for converting the rotation movement of the screw to electrical energy is located at a position difficult to access, for instance on the bed of a river.

In an exemplary embodiment the hollow shaft is provided with at least one capillary for transporting a liquid through the hollow shaft.

The above embodiments of the shaft of the screw according to the invention can likewise be applied in other screws. A hollow shaft, a flexible shaft and/or a shaft with an inner core and a tube with slit arranged therearound as described above is for instance combined with another type of screw. A shaft according to the invention is for instance combined with a screw comprising a series of screw parts, whereby each screw part comprises at least one screw blade, wherein successive screw parts are coupled to each other by means of a coupling and are preferably coupled movably to each other. Such a combination of shaft and screw has the same advantages and effects as described above in respect of the screw according to the invention. Features of the screw according to the invention can particularly be combined as desired with such a screw-shaft combination.

In a further preferred embodiment the coupling comprises a cardan joint. A cardan joint is also known as a cardan shaft or universal joint.

In a further preferred embodiment the coupling comprises a ball joint.

It is noted that the coupling between the screw parts can also take a stiff form such that a substantially stiff screw is obtained.

The invention further relates to a screw part evidently intended for a screw as described above.

The invention moreover relates to a method for converting movement of a fluid to a rotating movement of the screw, comprising of placing a screw as described above in the fluid.

The screw part and the method have the same advantages and effects as described in respect of the screw according to the invention. Features of the screw, the screw part and the method can particularly be combined as desired according to the invention.

In a preferred embodiment of the method according to the invention the fluid comprises water and the method comprises of regulating sedimentation by means of the screw.

The method preferably comprises of selecting the dimensions and the weight of the screw on the basis of the desired balance between energy generation and regulation of sedimentation. A relatively large amount of energy is generated with a more powerful rotation by means of screw blades with a relatively large surface area. There will however also be a relatively great effect on sedimentation. If this is not desired at the planned location of the screw, it is possible to opt for smaller screw blades and/or a screw of less weight.

The invention also relates to a spiral-shaped screw for pumping a liquid, with at least one screw blade, wherein at least one tube is provided on an outermost end of the screw blade in radial direction such that the tube has a screw shape. The tube has an inlet opening so that water can be admitted by rotating the screw. The screw has a rotation shaft preferably embodied as hollow shaft. The shaft is preferably flexible. The at least one tube preferably runs over the outermost end of the screw blade from a front side of the screw to a rear side of the screw, and then runs via the interior of the shaft from the rear side of the screw to the front side of the screw. The inlet opening can be arranged on the front side or rear side of the screw. The outlet opening can also be arranged on the front side or rear side. The inlet opening is for instance arranged during use on the side of the screw located upstream and the outlet opening is arranged on the downstream side, or vice versa. The screw is preferably constructed from screw parts as described above. The screw can be combined as desired with features as described above in respect of the screw according to the invention.

Further advantages and effects of the invention will be elucidated hereinbelow on the basis of exemplary embodiments thereof, wherein reference is made to the figures.
Figure 1 shows a screw according to the invention in water for the purpose of generating electrical energy and regulating sedimentation;
Figures 2A-2B show an alternative screw part according to the invention, wherein figure 2A is a top view and figure 2B is a perspective view;
Figure 3 is a schematic top view of a river in which four screws according to the invention are placed;
Figure 4 shows a screw according to the invention applied for generating energy from wind; and
Figures 5A-B are top views of a screw according to the invention in which is arranged a shaft comprising a plurality of slit tubes, in rest state (5A) and in wound state (5B);
Figures 6 and 7 show respectively a top view and perspective view of an alternative shaft;
Figures 8A-8C show a further example of a screw part according to the invention in which a convex-concave coupling is provided between the screw parts; and
Figures 9A-9C show an alternative embodiment of the screw in which it is provided with a pump mechanism.

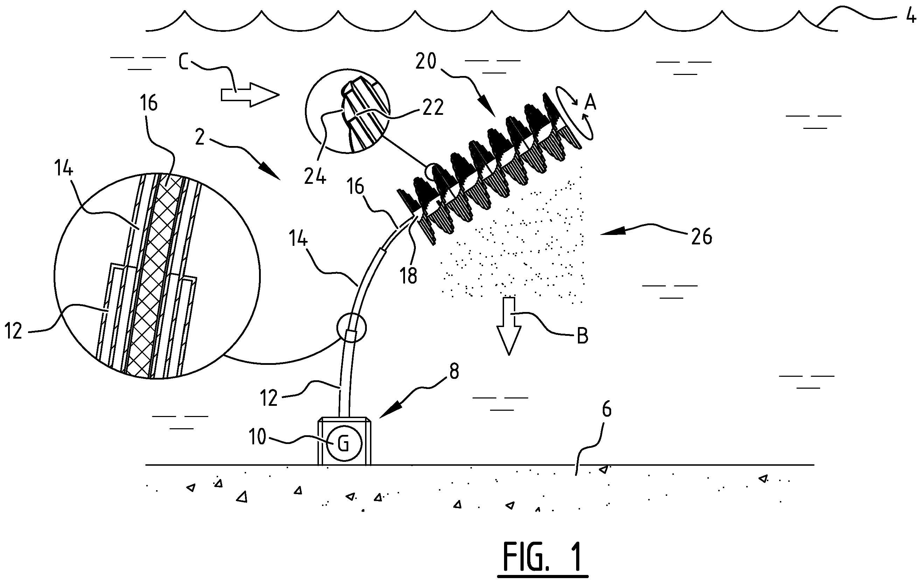

Flexible screw 2 (figure 1) is placed under water surface 4. A foundation 8 is placed on the bed 6. Present in foundation 8 is a generator 10 for converting the rotating movement of screw 2 to electrical energy.

Provided on the underside of the screw is sleeve 12 inside which is situated a second sleeve 40. Flexible shaft 16 is provided in sleeve 14 and can rotate therein. Flexible shaft 16 is connected to generator 10. Sleeves 12 and 14 take a stiffer form than flexible shaft 16. Flexible shaft 16 is hereby coupled at a relatively small angle to generator 10. This guarantees an effective coupling between shaft 16 and generator 10. There is optionally a difference in stiffness between sleeves 12 and 14. In the shown embodiment the sleeves comprise a cavity. This is optional.

Flexible shaft 16 extends through an opening 18 of a number of screw parts. These screw parts together form a double spiral-shaped screw 20. The screw parts comprise a flat upper side 22 and are provided on an underside with a wave profile 24.

Screw 20 rotates to the left or right (direction A). This rotation is transmitted by means of flexible shaft 16 to generator 10 which generates electricity. This electricity can be transported by means of an electrical cable (not shown). The presence of screw 20 in the water moreover has a regulating effect on sedimentation material 26. The sedimentation material, for instance sand, will settle more quickly as according to arrow B due to the presence of the screw. The flow of the water is uneven, i.e. the flow speed and the flow direction are position-dependent. The average flow direction is indicated with arrow C. This accounts for the inclining position of screw 20.

In an alternative embodiment generator 10 is provided on the bank or on a floating construction. In this case screw 20 comprises for instance a weight on its lower outer end in order to hold the screw under water.

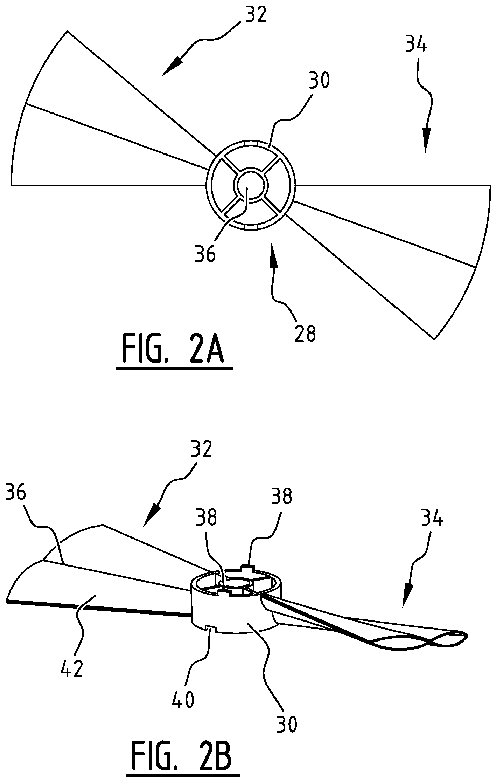

Screw 20 is constructed from screw parts. An example of such a screw part can be seen in figures 2A and 2B. Screw part 28 comprises a cylindrical coupling piece 30 and screw blades 32 and 34. The coupling piece is provided with a central opening 36 for passage of flexible shaft 16. Coupling piece 30 is provided with protrusions 38 and corresponding recesses 40. Protrusion 38 is offset relative to recess 40 so that stacked screw parts align so that their screw blades 32, 34 connect and form a spiral shape. A plurality of protrusions and/or recesses are optionally provided.

The angle at the centre between protrusions 38 and recesses 40 corresponds to the angle taken up by a screw blade 32, 34, so that the screw blades of successive screw parts connect to each other.

The screw part shown in figures 2A-2B has a profile other than shown in figure 1, i.e. a waved surface with waves 42 and valley 44. The profile of screw blades 32 and 34 is symmetrical, i.e. the upper side and underside have the same wave pattern. Between the upper surface and the lower surface of screw blades 32, 34 can be formed a hollow space for providing a fluid such as air or other gas, or a solid material such as a metal for the purpose of strengthening and/or weighting the screw blade.

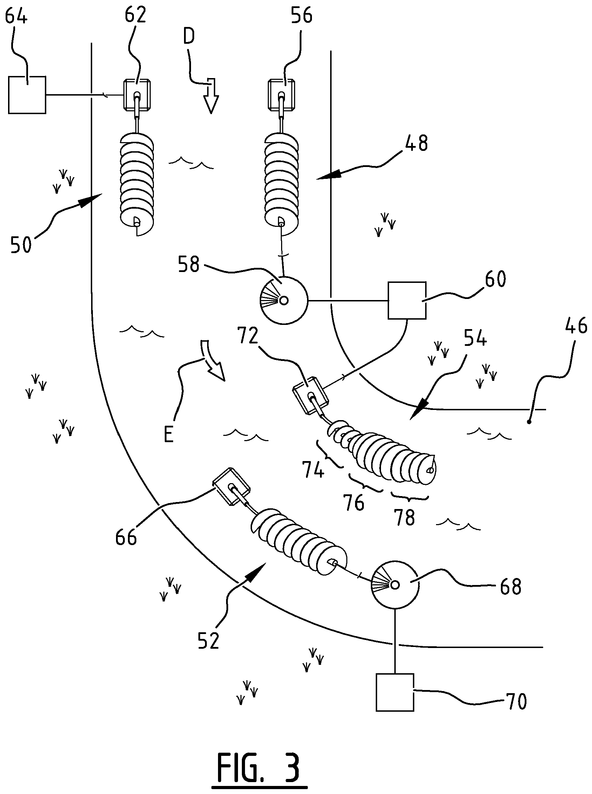

A number of screws 48, 50, 52, 54 according to the invention are placed in river 46 (figure 3). Screw 48 is connected to generator housing 56. The shaft of screw 48 comprises an electrically conductive element, i.e. a power cable, whereby the electrical energy generated in generator housing 56 can be transported via buoy 58 to power unit 60 at the waterside. Alternatively as in the case of screw 50, the electrical energy generated in generator housing 62 is carried via a separate cable to power unit 64 at the waterside.

Screw 48 and screw 50 are aligned in the flow direction D of the river. Screws 52 and 54 are situated in a part of river 46 in which the flow direction changes as according to arrow E.

Screw 52 is coupled to generator housing 66. As in the case of screw 48, the electrical energy is carried via an electrically conductive cable in the shaft of screw 52 via buoy 68 to power unit 70 at the waterside. The buoy is optional.

In the case of screw 54 the electrical energy generated in generator 72 is carried to power unit 60 on the waterside. Screw 54 comprises screw parts of differing dimensions so that a first part 74 is obtained with a first average diameter, a part 76 with a second average diameter and a part 78 with a third average diameter. As shown in the figure, the diameter changes gradually.

It is also possible according to the invention to provide a screw with a continuously decreasing or increasing diameter so that a conical screw shape is obtained.

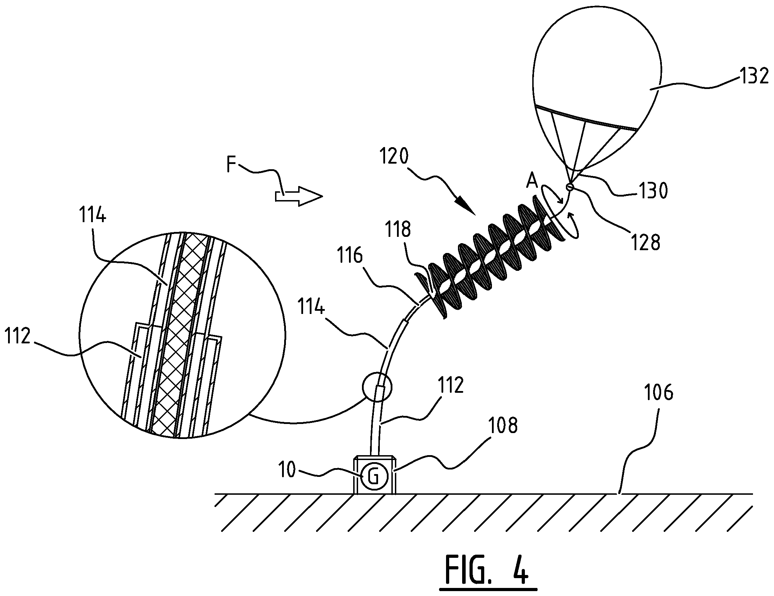

Figure 4 shows an application of a screw according to the invention for generating energy from wind. Similar components as in figure 1 are numbered with the same reference numerals increased by 100. Device 102 is placed on ground surface 106. Foundation 108 comprises a generator 110 for generating electricity on the basis of the rotation of screw 120. Provided once again are sleeves 112 and 114 and a flexible shaft 116 passing through an opening 180 in screw 120. In this case the upper outer end of screw 120 is coupled via a coupling 128 and cable 130 to balloon 132. Balloon 132 here bears a part of the weight of screw 120. Alternatively, an airship is used instead of a balloon.

Flexible shaft 116 preferably takes a stiffer form than shaft 16 of figure 1 so that shaft 116 also bears a part of the weight of screw 120. The wind direction is indicated in this figure with arrow F.

In another alternative the generator 110 is not provided on the ground but is carried by balloon or airship 132. Generator 110 is for instance attached close to coupling 128.

Screw 120 is likewise profiled, although in this case the peripheral edge of the screw is smooth.

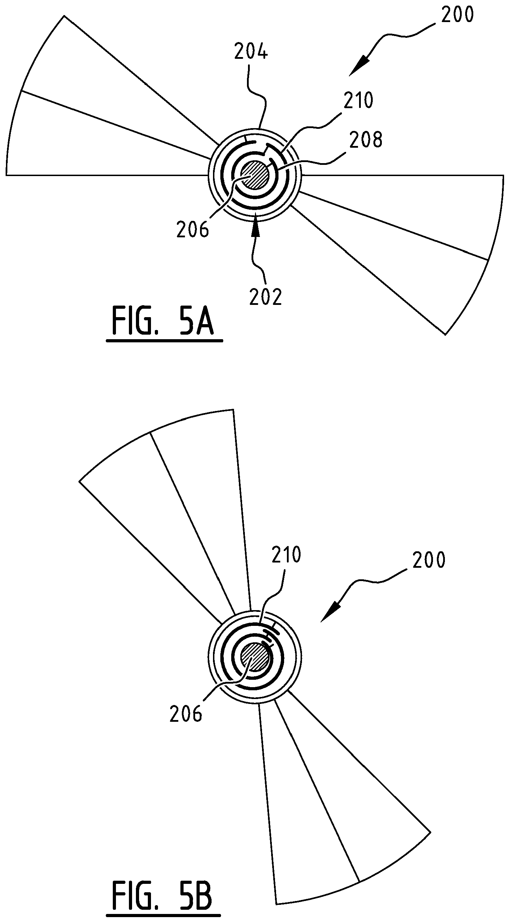

Screw 200 (figures 5A, 5B) is provided with a shaft 202 situated inside cylinder 204 of screw 200. The shaft comprises an inner core 206. In the shown embodiment the inner core 206 is solid, but alternatively takes a hollow form. Arranged round inner core 206 are a number of tubes 208 which are slit from their one outer end to their other outer end. Tube 208 is connected to core 206. Tube 210 lies round tube 208 and is connected thereto. Tube 210 is moreover connected to cylinder 204 to which the rotor blades are attached.

When a force is exerted on the rotor blades, this force will be transmitted via tubes 208, 210 to the inner core. Because tubes 208, 210 have slits, they will be wound up to some extent as shown in figure 5B. The shaft can hereby absorb torsional forces exerted when different screw parts are subjected to a different force by the medium in which screw 200 is placed.

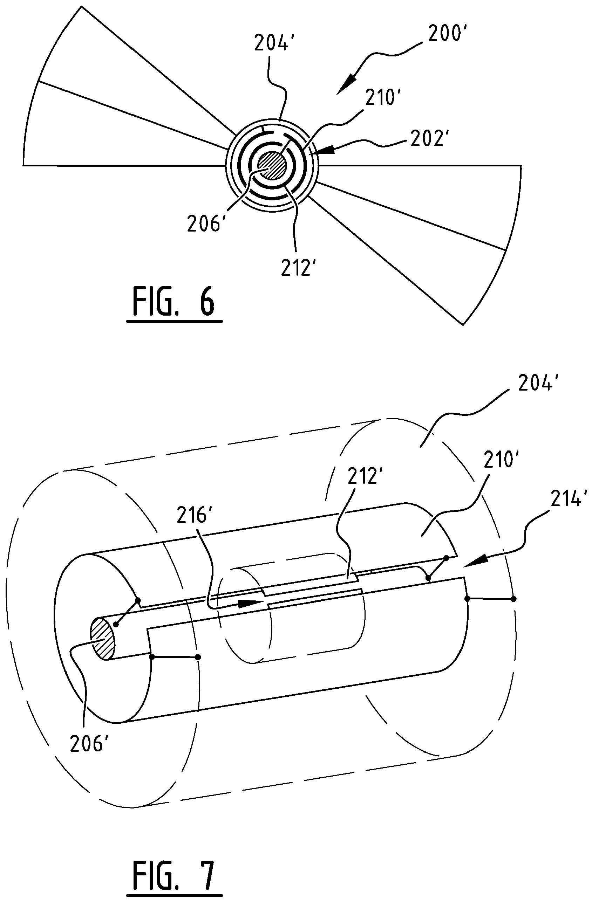

Alternatively or additionally, a shaft 202' (figures 6, 7) comprises a slit tube 212' which is not connected to the other tubes and/or the core. Because the diameter of tube 210' will decrease when it is wound up, similarly to the decrease in the diameter of tube 210 in figure 5B, tube 210' will make contact with tube 212'.

In figure 7 the tubes 210', 212' are shown with a straight slit 214', 216', i.e. the recess in the wall of tubes 210', 212' runs parallel to the longitudinal direction of the respective tube. An inclining or spiral-shaped slit is alternatively provided.

A tubular casing is optionally provided which connects to cylinder 204, 204' so that shaft 202, 202' is also provided with a preferably liquid-tight housing outside screw 200, 200'.

The shaft as shown in figures 5A, 5B, 6 and 7 can comprise a plurality of slit tubes which are arranged round each other.

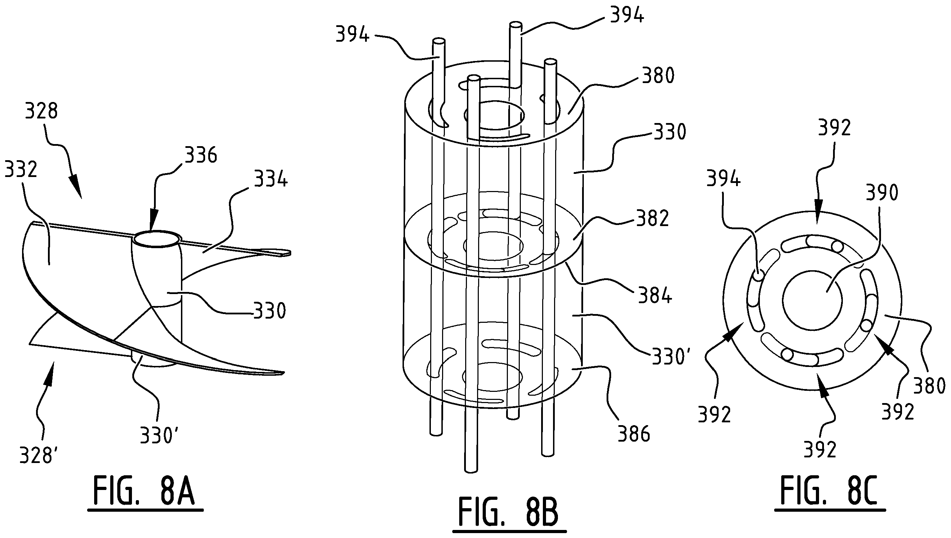

Screw parts 328, 328' (figure 8A) comprise screw blades 332, 334 which are provided on a central bush 330, 330'. Bush 330, 330' has a through-opening 336.

The upper sides 380, 384 of bushes 330, 330' are dish-like (figure 8B). The undersides 382, 386 of bushes 330, 330' are dome-like (or convex). The dome-like underside 382 of bush 330 fits into dish-like upper side 384 of bush 330'.

Bushes 330, 330' are provided with an optional central bore 390 and a number of slots 392 located out of centre through the length of the bush. Cables 394 extend through the slots. The cables can rotate to some extent around the longitudinal axis of the screw parts by moving in the slots. A torsional force can hereby be absorbed by the screw. The same type of bush 330, 330' is moreover applied for all screw parts despite the fact that each successive screw part is rotated relative to its adjacent screw parts. This is an advantage in production.

Bushes 330, 330' and screw blades 332, 334 can be produced separately. This is advantageous, particularly for a screw with a diameter of more than about 2 metres. The production of screws is further simplified by providing bushes 330, 330' and screw blades 332, 334 as separate components which are joined together later.

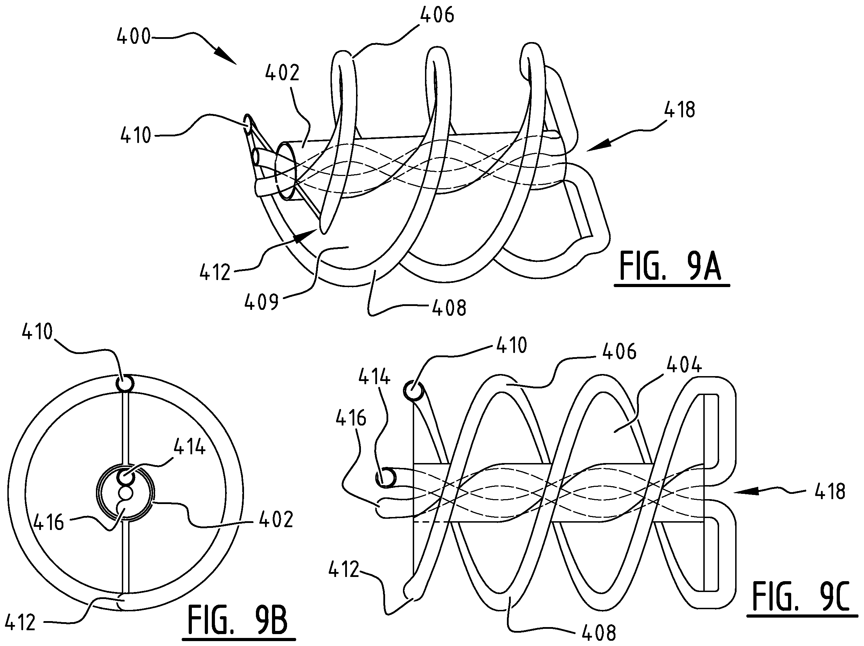

Screw 400 (figures 9A-9C) has a pump function. Screw 400 comprises a hollow shaft which is optionally flexible. Screw blades 404 are mounted on the hollow shaft. Screw 400 can be constructed from screw parts as described above or can be formed integrally. Tubes 406, 408 are provided on the outer edge of screw blades 404 for passage of water. An outer end of each of the tubes 406, 408 is provided with inlet openings 412, 410. These inlet openings 412, 410 are situated in the shown embodiment close to an outer end of the screw. In the shown embodiment the screw comprises two of such tubes, one for each screw shape. In the case more or fewer screw shapes are applied, correspondingly more or fewer tubes can be applied.

The other outer end of tubes 406, 408 is provided with an outlet opening 416, 414. Tubes 406, 408 lead from a front side of screw 400, where inlet openings 410, 412 are arranged, to a rear side 418 of the screw. Tubes 406, 408 then run via the interior of hollow shaft 402 from rear side 418 back to the front side of screw 400. On the inner side of shaft 402 tubes 406, 408 have the same screw shape, wherein the screw shape in shaft 402 has a smaller diameter than the diameter of the screw shape of the tubes 406, 408 on the outer side of screw 400. The screw shape of tubes 406, 408 inside shaft 402 has substantially the same pitch as the screw shape of tubes 406, 408 on the outer edge of screw blades 404.

Screw 400 comprises a pump mechanism comprising the tubes 406, 408. Screw 400 can be placed in a water flow, wherein an underside of screw 400 is situated partially underwater. Shaft 402 is situated here for instance roughly on the water surface. Screw 400 can for instance be provided in floating manner for this purpose. When water flows against blades 404, screw 400 will begin to rotate around its longitudinal axis. When an inlet opening 410, 412 is moved into the water by the screw movement of screw 400, water is hereby scooped into tube 408, 406. Inlet openings 410, 412 thus alternately take in water and air, whereby layers of water and air alternate in tubes 406, 408. These layers move toward the rear side of screw 18. The layers subsequently move via the interior of the shaft back again to the front side of screw 400. The screw shape formed by tubes 406, 408 in shaft 402 has a decreased diameter compared to the diameter of the screw shape which they form on the outer side of screw blades 404. The air in tubes 406, 408 - which is present between the water parts in tubes 406, 408 - is hereby compressed. This imparts an additional propulsion to the water and air in tubes 406, 408. The water can hereby be pumped. Situated on the front side of screw 300 is a coupling piece (not shown) which carries the water from outlet openings 414, 416 to a (stationary) transport conduit, so that the water is pumped through this conduit. The coupling piece also allows rotation of shaft 402. The coupling piece for instance comprises a co-rotating bearing. Screw 400 can for instance be utilized to pump water from a lower level to a higher level, for instance from a river to a basin at a higher position. Although described above is that the tubes run via the shaft back again to the front side, an embodiment can also be envisaged in which the tubes are arranged solely on the outer edge of the screw blades.

The invention is by no means limited to the above described preferred embodiments thereof. The rights sought are defined by the following claims, within the scope of which many modifications can be envisaged. It is particularly possible to provide a screw according to the invention with dimensions of several nanometres. Such a screw is for instance applied to generate energy from liquids flowing in a human or animal, such as in a bloodstream, or to move through such liquids and/or to release substances such as medicines. The screw then has a transport function. The screw according to the invention can moreover be applied for the purpose of stabilizing a fluid.

It is possible to mount the screw on a bridge pier. A generator is for instance connected to the bridge pier and the screw is connected to the generator.

## Claims

1. Screw (2, 20, 48, 50, 52, 54, 120, 200, 200') comprising a series of screw parts (28, 328, 328'), each screw part comprising at least one screw blade (32, 34, 332, 334), wherein successive screw parts are coupled to each other by means of a coupling (30, 38, 40, 330, 394), **characterized in that** the screw blades of successive screw parts substantially connect to each other such that the series of screw parts forms a spiral-shaped screw having a substantially continuous screw blade, and wherein a first screw part and a second adjacent screw part in the series comprise respectively a first aligning means (38) and a second aligning means (40) for aligning the respective screw parts around the rotation axis of the screw, wherein preferably the coupling comprises the aligning means, the coupling comprising a shaft (16, 116, 202, 202') on which the screw parts are provided, wherein the shaft (16, 116, 202, 202') is a flexible shaft (16, 116, 202, 202'), and wherein the successive screw parts are coupled movably to each other by means of the coupling.

2. Screw as claimed in claim 1, wherein each screw part comprises two screw blades so that the series of screw parts forms a screw with a double spiral form.

3. Screw as claimed in claim 1 or 2, wherein the screw blades comprise a profile (24, 42, 44) on at least one side, wherein preferably the profile is a wave profile, wherein preferably both sides of the screw blades comprise substantially the same profile.

4. Screw as claimed in at least one of the foregoing claims, wherein the screw parts comprise a plastic, preferably polyethylene (PE), more preferably high-density polyethylene (HDPE).

5. Screw as claimed in any one of the foregoing claims, wherein the shaft comprises an inner core (206, 206') around which at least one tube (208, 212') is arranged, the tube wall of which is provided with a slit extending from the one outer end of the tube to the other outer end of the tube.

6. Screw as claimed in any one of the foregoing claims, wherein preferably chambers are provided in the shaft for air, water and/or a solid material, wherein preferably a number of chambers are filled such that the shaft has an asymmetrical mass distribution.

7. Screw as claimed in any of the foregoing claims, wherein the shaft comprises an electrically conductive element.

8. Screw as claimed in at least one of the foregoing claims, wherein the coupling comprises a cardan joint and/or ball joint.

9. Method for converting movement of a fluid to a rotating movement of a screw, comprising of:
- placing a screw as claimed in at least one of the claims 1-8 in the fluid.

10. Method as claimed in claim 9, wherein the fluid comprises water and the method comprises of regulating sedimentation by means of the screw.

## Patentansprüche

1. Schraube (2, 20, 48, 50, 52, 54, 120, 200, 200'), die eine Reihe von Schraubenteilen (28, 328, 328') aufweist, wobei jeder Schraubenteil wenigstens ein Schraubenblatt (32, 34, 332, 334) aufweist, wobei aufeinanderfolgende Schraubenteile mit Hilfe einer Kopplung (30, 38, 40, 330, 394) miteinander gekoppelt sind,
**dadurch gekennzeichnet, dass** die Schraubenblätter aufeinanderfolgender Schraubenteile im Wesentlichen derart miteinander verbinden, dass die Reihe von Schraubenteilen eine spiralförmige Schraube mit im Wesentlichen zusammenhängendem Schraubenblatt bildet, und wobei ein erster Schraubenteil und ein zweiter benachbarter Schraubenteil in der Reihe jeweils eine erste Ausrichtungseinrichtung (38) und eine zweite Ausrichtungseinrichtung (40) zum Ausrichten der jeweiligen Schraubenteile um die Drehachse der Schraube herum aufweisen, wobei die Kopplung bevorzugt die Ausrichtungseinrichtung aufweist, wobei die Kopplung eine Welle (16, 116, 202, 202') aufweist, auf der die Schraubenteile bereitgestellt sind, wobei die Welle (16, 116, 202, 202') eine flexible Welle (16, 116, 202, 202') ist, und wobei die aufeinanderfolgenden Schraubenteile mit Hilfe der Kopplung beweglich miteinander gekoppelt sind.

2. Schraube nach Anspruch 1, wobei jeder Schraubenteil zwei Schraubenblätter aufweist, so dass die Reihe von Schraubenteilen eine Schraube mit einer Doppelspiralform bildet.

3. Schraube nach Anspruch 1 oder 2, wobei die Schraubenblätter ein Profil (24, 42, 44) auf wenigstens einer Seite aufweisen, wobei das Profil bevorzugt ein Wellenprofil ist, wobei bevorzugt beide Seiten der Schraubenblätter im Wesentlichen das gleiche Profil aufweisen.

4. Schraube nach wenigstens einem der vorhergehenden Ansprüche, wobei die Schraubenteile einen Kunststoff, bevorzugt Polyethylen (PE), bevorzugter ein Polyethylen hoher Dichte (HDPE), aufweisen.

5. Schraube nach einem der vorhergehenden Ansprüche, wobei die Welle einen Innenkern (206, 206') aufweist, um den herum wenigstens ein Rohr (208, 212') angeordnet ist, dessen Rohrwand mit einem Schlitz versehen ist, der sich von dem einen äußeren Ende des Rohrs zu dem andere äußeren Ende des Rohrs erstreckt.

6. Schraube nach einem der vorhergehenden Ansprüche, wobei in der Welle bevorzugt Kammern für Luft, Wasser und/oder ein festes Material bereitgestellt sind, wobei bevorzugt eine Anzahl von Kammern derart gefüllt ist, dass die Welle eine asymmetrische Massenverteilung hat.

7. Schraube nach einem der vorhergehenden Ansprüche, wobei die Welle ein elektrisch leitendes Element aufweist.

8. Schraube nach wenigstens einem der vorhergehenden Ansprüche, wobei die Kopplung ein Kardangelenk und/oder ein Kugelgelenk aufweist.

9. Verfahren zur Umwandlung der Bewegung eines Fluids in eine Drehbewegung einer Schraube, das aufweist:
- Anordnen einer Schraube nach wenigstens einem der Ansprüche 1 - 8 in dem Fluid.

10. Verfahren nach Anspruch 9,
wobei das Fluid Wasser aufweist, und das Verfahren das Regulieren der Sedimentbildung mit Hilfe der Schraube aufweist.

## Revendications

1. Vis (2, 20, 48, 50, 52, 54, 120, 200, 200') comprenant une série de parties de vis (28, 328, 328'), chaque partie de vis comprenant au moins une lame de vis (32, 34, 332, 334), dans laquelle des parties de vis successives sont couplées l'une à l'autre au moyen d'un élément de couplage (30, 38, 40, 330, 394),
**caractérisée en ce que** les lames de vis de parties de vis successives sont sensiblement reliées l'une à l'autre de telle sorte que les séries de partie de vis forment une vis en forme de spirale présentant une lame de vis sensiblement continue, et dans laquelle une première partie de vis et une seconde partie de vis adjacente de la série comprennent respectivement un premier moyen d'alignement (38) et un second moyen d'alignement (40) afin d'aligner les parties de vis respectives autour de l'axe de rotation de la vis, dans laquelle, de préférence, l'élément de couplage comprend les moyens d'alignement, l'élément de couplage comprenant un arbre (16, 116, 202, 202') sur lequel les parties de vis sont formées, dans laquelle l'arbre (16, 116, 202, 202') est un arbre flexible (16, 116, 202, 202'), et dans laquelle les parties de vis successives sont couplées de manière à pouvoir se déplacer l'une par rapport à l'autre au moyen de l'élément de couplage.

2. Vis selon la revendication 1, dans laquelle chaque partie de vis comprend deux lames de vis de telle sorte que la série de parties de vis forme une vis avec une forme à double spirale.

3. Vis selon la revendication 1 ou 2, dans laquelle les lames de vis comprennent un profil (24, 42, 44) sur au moins un côté, dans laquelle, de préférence, le profil est un profil en onde, dans laquelle, de préférence, les deux côtés des lames de vis présentent sensiblement le même profil.

4. Vis selon au moins l'une quelconque des revendications précédentes, dans laquelle les parties de vis sont constituées à base de matière plastique, de préférence, de polyéthylène (PE), plus préférablement, de polyéthylène à haute densité (HDPE).

5. Vis selon l'une quelconque des revendications précédentes, dans laquelle l'arbre comprend un noyau interne (206, 206') autour duquel est agencé au moins un tube (208, 212') dont la paroi de tube comporte une fente s'étendant à partir de la première extrémité externe du tube vers l'autre extrémité externe du tube.

6. Vis selon l'une quelconque des revendications précédentes, dans laquelle, de préférence, des chambres sont formées sur l'arbre pour de l'air, de l'eau et/ou un matériau solide, dans laquelle, de préférence, un certain nombre de chambres sont remplies de telle sorte que l'arbre présente une répartition de masse asymétrique.

7. Vis selon l'une quelconque des revendications précédentes, dans laquelle l'arbre comprend un élément électriquement conducteur.

8. Vis selon au moins l'une quelconque des revendications précédentes, dans laquelle l'élément de couplage comprend un joint de cardan et/ou un joint à bille.

9. Procédé de conversion d'un mouvement d'un fluide en un mouvement tournant d'une vis, comprenant l'étape de :
mise en place d'une vis selon au moins l'une quelconque des revendications 1 à 8 dans le fluide.

10. Procédé selon la revendication 9, dans lequel le fluide comprend de l'eau et le procédé comprend le réglage de la sédimentation au moyen de la vis.
